# EUROPÄISCHE PATENTSCHRIFT

(11) **EP 0 984 459 B1**
(45) Veröffentlichungstag und Bekanntmachung des Hinweises auf die Patenterteilung: **16.02.2005**
(21) Anmeldenummer: 99109143.0
(22) Anmeldetag: 08.05.1999
(51) Int. Cl.: H01C 10/48, G01F 23/36, H01C 10/08

(54) **Drehwiderstand**
Rotary potentiometer
Potentiomètre rotatif

(30) Priorität: 31.08.1998 DE 19839037
(43) Veröffentlichungstag der Anmeldung: 08.03.2000
(73) Patentinhaber: Preh GmbH, 97616 Bad Neustadt a.d. Saale (DE); TI Automotive (Neuss) GmbH, 41456 Neuss (DE)
(72) Erfinder: Grötschel, Norbert, 41472 Neuss (DE); Hemmert, Klaus, 97618 Hollstadt (DE)

(56) Entgegenhaltungen:
- EP-A- 0 518 235
- EP-A- 0 764 830
- EP-A- 0 806 637
- GB-A- 2 270 760
- PATENT ABSTRACTS OF JAPAN vol. 009, no. 137 (P-363), 12. Juni 1985 (1985-06-12) & JP 60 018720 A (KOITO SEISAKUSHO KK), 30. Januar 1985 (1985-01-30)

## Beschreibung

Die Erfindung betrifft einen Drehwiderstand nach dem Oberbegriff des Patentanspruchs.

Ein derartiger Drehwiderstand ist aus der DE 29 32 714 C2 bekannt, in der auch angegeben ist: Als vorteilhaft hat es sich erwiesen, die Leiterbahnen je etwa 0,2 mm breit auszuführen - und den gegenseitigen Abstand etwa ebenso gross -, da sich dann eine besonders hohe Messwertauflösung bei geringem Herstellungsaufwand erzielen lässt. Eine weitere Verfeinerung des Leiterbahnenmusters führt zwar zu einer höheren Auflösung, jedoch auch zu einer Erhöhung der Herstellungskosten, während ein groberes Leiterbahnenmuster eine geringere Auflösung aber auch geringere Herstellungskosten nach sich zieht.

Aus der DE 44 39 829 A1 ist eine Ausführung eines Drehwiderstandes in Dickschichttechnik mit einer Trägerplatte bekannt, der ein schwenkbarer Schleiferhebel zugeordnet ist, der mit einer Schleiferbahn zusammenwirkt, die aus einer Reihe mit Abstandslücken nebeneinanderliegender Leiterbahnen gebildet ist, die ausserhalb der Schleiferbahn mit einer Widerstandsschicht verbunden sind, wobei eine von der ersten Schleiferbahn elektrisch getrennte zweite Schleiferbahn vorgesehen ist, deren Leiterbahnen mit einer Widerstandsschicht verbunden und so ausgerichtet sind, dass sie gegenüber den Abstandslücken der ersten Schleiferbahn liegen, wobei der Schleiferhebel für jede Schleiferbahn einen Schleifer aufweist, die miteinander elektrisch verbunden sind.

In der JP 60018720 wird ein Drehwiderstand für eine Flüssigkeitsstands-Anzeige beschrieben, bei dem der Anpraßdruck des Schleifers auf der Schleiferbahn mit mechanischen mitteln stabilisiert wird, um Meßfehler zu vermeiden.

Obwohl beide erstgenannten Ausführungen bereits zufriedenstellend arbeiten und eine hohe Auflösung der Verstellung des Schleiferhebels durch entsprechende Widerstandsänderungen ergeben, hat es sich gezeigt, dass bei Einsatz des Drehwiderstandes als Füllstandsanzeiger in einem Brennstofftank eines Kraftfahrzeuges und Verarbeitung des Drehwiderstandssignals in einem elektronischen Steuergerät kurzzeitige Unterbrechnungen des Anzeigegeräts, wie sie durch kurzzeitiges Abheben der Schleiferhebelkontakte von den Schleiferbahnen bei starken Vibrationen/Fahrbahnunebenheiten oder durch Schwebeteilchen im Brennstoff auftreten können, zu Fehlermeldungen des elektrischen Steuergeräts führen, die eine Stillegung der Füllstandsanzeige bewirken, die nur in einer Werkstatt behoben werden kann.

Hierdurch sind Werkstattaufenthalt und Werkstattkosten verursacht, obwohl kein eigentlicher Defekt vorliegt.

Hiervon ausgehend liegt der Erfindung die Aufgabe zugrunde, einen gattungsgemässen Drehwiderstand so auszubilden, dass kurzzeitiges Unterbrechen der Drehwidestandsanzeige zu keiner Abschaltung der Füllstandsanzeige führen kann.

Diese Aufgabe ist durch die im Kennzeichen des Patentanspruchs genannten Merkmale gelöst worden.

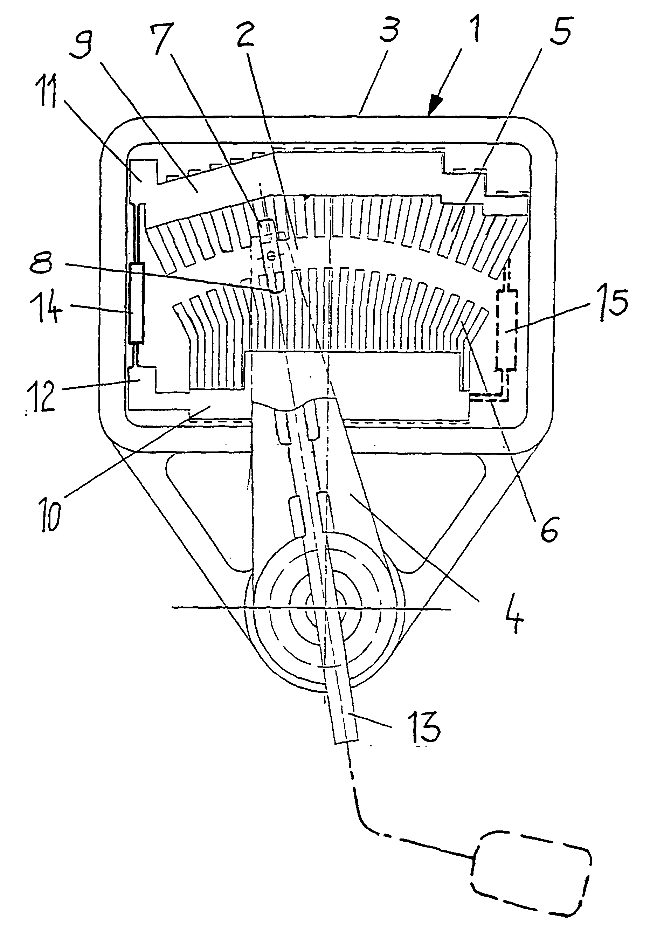

Ein Ausführungsbeispiel der Erfindung ist in der Zeichnung schematisch dargestellt und wird nachfolgend mit Angabe erreichbarer Vorteile beschrieben.

Die Zeichnung zeigt einen erfindungsgemässen Drehwiderstand 1 mit einer Trägerplatte 2, die aus einem Keramikwerkstoff bestehen kann, die an einer Halteplatte 3 befestigt ist, und der ein schwenkbarer Schleiferhebel 4 zugeordnet ist, der z. B. an der Halteplatte 3 gelagert ist.

Der Schleiferhebel 4 wirkt mit zwei Schleiferbahnen 5, 6 zusammen und weist für jede Schleiferbahn 5, 6 einen Schleifer 7, 8 auf, die elektrisch miteinander verbunden sind, wobei die erste und/oder die zweite Schleiferbahn 5, 6 mit Widerstandsschichten 9, 10 verbunden oder als Kontaktbahn ausgeführt sind/ist und elektrische Anschlüsse 11, 12 aufweisen.

Der Schleiferhebel 4 ist mit einem Schwimmerhebel 13 als Teil einer Tankfüllstandsanzeige verbunden. Durch die Schwimmerhebelbewegung stellt sich bei leerem Tank ein hoher Drehwiderstandswert und bei vollem ein kleiner Wert ein.

Erfindungsgemäss ist nun vorgesehen, dass die elektrischen Anschlüsse 11, 12 über einen Widerstand 14 kurzgeschlossen sind, der einen Widerstandswert aufweist, der wenigstens der Grösse des grössten Widerstandswerts des Drehwiderstands 1 (bei leerem Brennstofftank) entspricht.

Alternativ kann vorgesehen sein, dass der Widerstand 14 aus einer Reihenschaltung der Widerstandsschicht(en) 9, 10 und eines Zusatzwiderstandes 15 gebildet ist, wie gestrichelt dargestellt ist.

Durch diese Massnahmen tritt bei kurzzeitigem Abheben des Schleiferhebels 4 keine Unterbrechung des Drehwiderstandssignals auf, sondern nur eine Änderung, so dass keine Stillegung der Füllstandsanzeige durch das elektronische Steuergerät erfolgt.

Sollte im Fahrzeugbetrieb eine dauerhafte Störung des Drehwiderstandes 1 vorliegen, zeigt die Füllstandsanzeige permanent leeren Tank an, so dass ein Fahrzeugbetreiber entscheiden kann, eine Werkstatt aufzusuchen.

Die alternative Ausführung hat den Vorteil, dass bei einem Bruch, beispielsweise der Trägerplatte 2 des Drehwiderstandes 1, die Schleiferbahnen 5, 6 getrennt werden, dann zeigt der Drehwiderstand 1 einen hohen Widerstand an, der über dem des Widerstandes 14 liegt, so dass das elektronische Steuergerät dauerhafte Störung erkennen kann und ein Signal Werkstatt aufsuchen ausgeben kann.

## Patentansprüche

1. Drehwiderstand (1) mit einer Trägerplatte (2), der ein Schleiferhebel (4) zugeordnet ist, der mit zwei Schleiferbahnen (5,6) zusammenwirkt und für jede Schleiferbahn (5,6) einen Schleifer (7,8) aufweist, die elektrisch miteinander verbunden sind, wobei die erste und/oder die zweite Schleiferbahn (5,6) mit Widerstandsschichten (9,10) verbunden sind/ist und elektrische Anschlüsse (11,12) aufweisen, **dadurch gekennzeichnet, dass** die elektrischen Anschlüsse (11, 12) über einen Widerstand (14) kurzgeschlossen sind, der einen Widerstandswert aufweist, der wenigstens der Grösse des grössten Widerstandswerts des Drehwiderstands (1) entspricht.

2. Drehwiderstand nach Anspruch 1, **dadurch gekennzeichnet, dass** der Widerstand (14) aus einer Reihenschaltung der Widerstandsschicht(en) (9, 10) und eines Zusatzwiderstandes (15) gebildet ist.

## Claims

1. Rotary potentiometer (1) having a mounting board (2) which has an associated wiper lever (4) which interacts with two wiper tracks (5, 6) and has a wiper (7, 8) for each wiper track (5, 6), which wipers (7, 8) are electrically connected to one another, with the first and/or the second wiper track (5, 6) being connected to resistance layers (9, 10) and having electrical connections (11, 12) **characterized in that** the electrical connections (11, 12) are short-circuited via a resistor (14) which has a resistance which corresponds at least to the magnitude of the greatest resistance of the rotary potentiometer (1).

2. Rotary potentiometer according to Claim 1, **characterized in that** the resistor (14) is formed from the resistance layer or layers (9, 10) and an additional resistor (15) which is connected in series.

## Revendications

1. Potentiomètre (1) comprenant une plaque porteuse (2) à laquelle est associé un levier du curseur (4), lequel agit conjointement avec deux pistes de curseur (5, 6) et présente un curseur (7, 8) pour chacune des pistes de curseur (5, 6), lesquelles sont reliées électriquement entre elles, la première et/ou la deuxième piste de curseur (5, 6) étant réliée(s) à des couches résistives (9, 10) et présentant des bornes électriques (11 12), **caractérisé en ce que** les bornes électriques (11, 12) sont court-circuitées par le biais d'une résistance (14) qui présente une valeur de résistance qui correspond au moins au montant de la valeur de résistance la plus élevée du potentiomètre (1).

2. Potentiomètre selon la revendication 1, **caractérisé en ce que** la résistance (14) est formée par un circuit série composé d'une (de) couche(s) résistive(s) (9, 10) et d'une résistance supplémentaire (15).
